# EUROPEAN PATENT SPECIFICATION

(11) **EP 3 307 641 B1**
(45) Date of publication and mention of the grant of the patent: **15.01.2020**
(21) Application number: 16811056.7
(22) Date of filing: 15.06.2016
(51) Int. Cl.: B65D 33/25, B65D 30/20, B65D 30/08

(54) **BAG WITH ZIPPER CLOSURE AND SIDE FOLDS AND METHOD FOR MAKING SUCH A BAG**
BEUTEL MIT REISSVERSCHLUSSVERSCHLUSS UND SEITENFALTEN SOWIE VERFAHREN ZUR HERSTELLUNG SOLCH EINES BEUTELS
SAC AVEC FERMETURE À GLISSIÈRE ET PLIS LATÉRAUX ET PROCÉDÉ PERMETTANT DE RÉALISER UN TEL SAC

(30) Priority: 15.06.2015 DK 201570367
(43) Date of publication of application: 18.04.2018
(73) Proprietor: Schur Technology A/S, 8700 Horsens (DK)
(72) Inventor: PAPE, Henrik, 8700 Horsens (DK)
(74) Representative: Nielsen, Leif
(86) International application number: PCT/DK2016/050187
(87) International publication number: WO 2016/202342

(56) References cited:
- EP-A1- 1 020 369
- EP-A1- 1 077 182
- EP-A1- 1 607 340
- EP-A2- 1 211 061
- JP-A- S62 109 758
- US-A- 4 892 414
- US-A- 6 068 585
- US-A1- 2002 065 185
- US-A1- 2004 208 400
- US-B1- 6 325 543
- US-B1- 6 325 543
- US-B1- 6 393 804
- US-B2- 6 796 932
- US-B2- 6 796 932

## Description

### Field of the Invention

The present invention concerns a bag with a zipper closure, wherein the bag is formed of a first and a second superposed flat side formed of a first plastic film and folded side pieces formed of a second plastic film and which are disposed between the flat sides of the bag and welded to edge areas at the side edges of the flat sides, the bag including interacting zipper parts connected with each their flat side and extending from side edge to side edge of the bag.

The invention furthermore concerns a method for making a bag with a zipper closure, the bag being formed of a first and a second flat side that are mutually superposed, and side pieces that are inserted and folded between the flat sides of the bag and welded to edge areas at the side edges of the flat sides, the bag including interacting zipper parts in the form of a male part and a female part connected with each their flat side and extending from side edge to side edge of the bag.

The zipper parts are typically disposed in parallel with the top edge of the bag delimiting the bag opening and typically at a short distance from the top edge.

Such bags are usually made of plastic film where at least film sides that face each other are weldable plastic materials. Multi-layered films are used as well.

The bags can optionally be provided with folded bottom pieces for formation of standing bags, or the flat sides of the bag can be directly welded together at edge areas along the bottom edge of the bag.

### Background of the Invention

Bags with folded side pieces are advantageous compared with flat bags where the two flat sides are directly connected with each other by welding of edge areas along the side edges and bottom edge of the bag. The advantage is a larger access opening. The opening appears with largely rectangular cross-section. This is an advantage by filling, which may occur rapidly, as well as there are advantages when removing the contents of the bag as access to the interior of the bag is easier.

When working with bags with zippers, there is a general difficulty in establishing a complete sealing in the area around the zipper parts of the zipper at the side edges of the bag. This problem is caused by differences in thickness appearing at bag edges that are welded together with zipper parts disposed there between.

By bags with folded side pieces there are additional difficulties as the side pieces, which consist of folded side pieces, will contribute to increasing the thickness difference in the area around the zipper parts at the flat sides of the bag.

From US 6 796 932 it is known with bags of this type where the folded side pieces run from the bag bottom to a position under the zipper. The zipper extends from side edge to side edge of the bag. A welding of edge areas at side edges of the flat sides is established from the top edge to a position under the zipper. This means that the opening of the bag corresponds to the opening of a traditional flat bag formed of two flat sides that are welded directly to edge areas of each other at the side edges of the flat sides. From US 6 796 932 is also know a method as described in the introduction.

In practice, it is also known to provide such bags with a film web fastened to one of the flat sides and having a width such that the upper part of the folded side pieces are fastened to the bag side, the film web running from side edge to side edge of the bag. The film web extends in direction towards the bag opening and past the zipper parts. This causes further differences in thickness.

For some years it has thus been a widespread problem to provide bags with zippers with folded side pieces and at the same time ensure that the opening of the bag has the same cross-sectional area as the cross-sectional area of the bag with the folded side edges in extended condition.

It has therefore been desirable to indicate a bag of the type mentioned in the introduction by which it is possible to establish a large opening.

### Object of the Invention

It is the object of the invention to provide a side folded bag with zipper closure wherein the opening of the bag has the same cross-sectional area as the cross-sectional area of the bag with the folded side edges in extended condition, and where the problem of establishing a sealed bag in the area around the zipper at the side edges of the bag is solved in a simple way. It is further an object to provide a method for making such a bag.

### Description of the Invention

According to the present invention, this object is achieved by a bag of the kind mentioned in the introduction which is peculiar in that the folded side pieces extend from the bottom edge of the bag to the top edge of the bag, and that in the side pieces a thinning of material is established in an area opposite to the zipper parts disposed on the flat sides , such that the side pieces in the thinned area have a material thickness enabling the male and female parts to engage each other while at the same time the material of the side pieces is clamped there between, and wherein the second plastic film comprising the thinning is made of a multi-layered film where the film layers form a reduced material thickness at the thinning.

The method according to the invention is peculiar in method comprises steps of providing the first and the second flat side, superposing the flat sides and providing zipper parts and placing these on the flat sides, and disposing folded side pieces between the flat sides extending from the bottom edge of the bag to the top edge of the bag, that in the side pieces, prior to placing the zipper parts, a thinning of material is established in an area opposite to the zipper parts provided on the flat sides such that the side pieces in the thinned area are imparted a material thickness that enables the male and female parts to engage each other while at the same time the material of the side pieces is clamped there between, and wherein the second plastic film comprising the thinning is made of a multi-layered film where the film layers form a reduced material thickness at the thinning.

By opening such a bag there is achieved an access opening appearing with a largely rectangular cross-section. This facilitates filling which can occur rapidly as well as it is easier to remove the contents of the bag as easier access to the interior of the bag is provided through the rectangular opening. The bag opening is about 15% larger than the opening of a corresponding size of bag where the flat sides are directly welded together.

By providing flat sides and side faces with materials and thicknesses determined by the application of the bag and providing the side pieces with a substantially smaller thickness in a delimited area opposite the zipper, it will be possible to squeeze the folded side pieces in between the zipper parts when the bag is closed. Hereby is established a completely tight closure.

Therefore it is essential that the side pieces have such a thickness that closing of the zipper parts will be possible by a squeezing force clamping the flat sides by the engagement between the two zipper parts.

In order to establish such a difference in material thickness it is necessary that a thinning is performed in a thick film. This is a relatively simple process.

Even if the zipper element will contribute to greater thickness there will no longer be any problem of bringing the welding jaws sufficiently together. Minor leaks appearing in the area around the zipper parts at the side edges of the flat sides will therefore not be a problem as the squeezing of the side folds between the zipper parts will establish a sealed closure of the bag.

Previously used modifications are therefore avoided by the solution according to the present invention. Apart from the use of shortened side pieces relative to the height of the bag between bottom edge and top edge as mentioned in the introduction, shortened zipper parts that did not extend entirely between side edges of the bag have also be used. By a bag according to the present invention it will thus be possible to make the bags in continuous webs where the zipper parts are likewise applied in long strip-like webs, and are only cut so as to form individual bag items wherein the zipper parts extend between the side edges of the bags.

According to a further embodiment, the bag according to the invention is peculiar in that that the zipper parts are strip-shaped, and that the male part has a projection, and that the female part is made of two resilient legs forming a concavity adapted to receive the projection of the male part and the folded side pieces when the projection of the male part is pressed in between the legs of the female part.

The projection can be mushroom-shaped or arrow-shaped, and the concavity of the female part is provided with a correspondingly designed undercutting in order to establish a secure fastening.

The two resilient legs of the female part enable pressing in of the male part between the legs in such a way that the plastic material from the side pieces will be retained by the resiliency of the legs.

According to a further embodiment, the bag according to the invention is peculiar in that the side pieces in the area opposite the thinned parts have a thickness between 5 and 25 µm, preferably between 10 and 20 µm. By commonly used zippers, this will provide a tight closure.

The size of the used zippers will typically be made with a total width of 2 mm and a height of 1.8 mm for a zipper design.

According to a further embodiment, the bag according to the invention is peculiar in that that the flat sides and the side pieces are formed of a plastic film with a thickness between 50 and 200 µm, preferably between 80 and 120 µm. These are commonly used film thicknesses.

According to a further embodiment, the bag according to the invention is peculiar in that that the superposed film webs are made of multi-layered films, that at least the outermost layers of the first and second flat sides facing each other are made of a weldable plastic material, and that at least the outermost layers of the side pieces facing the flat sides are made of a weldable plastic material.

According to a further embodiment, the bag according to the invention is peculiar in that at least the outermost layers of the first and the second flat sides facing away from each other are made of a non-weldable plastic material.

The bags will preferably be made of multi-layered films. Production is hereby facilitated as welding only occurs between the weldable materials that are brought to engage each other.

According to a further embodiment, the bag according to the invention is peculiar in that the weldable material is PE or PP, and that the non-weldable plastic material is PET, OPA or OPP. Irrespectively whether weldable and non-weldable plastic materials are preferred, it will also be possible to use other plastic materials. However, the mentioned plastic materials are in practice those used the most for making plastic bags.

According to a further embodiment, the bag according to the invention is peculiar in that the zipper parts are welded or glued to the flat sides. As mentioned, the zipper parts will be mounted on the side faces. This may be effected by welding and gluing directly upon the flat sides. The folded side pieces will therefore be clamped between interacting zipper parts when the bag is closed.

According to a further embodiment, the bag according to the invention is peculiar in that the thinning is formed by forming the side pieces of the bag of an extruded web with the thinning produced by extrusion. By extrusion of film webs with a flat nozzle it is simple to establish the thinning just by adapting the nozzle aperture of the flat nozzle to the desired profile for the side pieces.

According to a further embodiment, the bag according to the invention is peculiar in that the bag is also provided with a folded bottom. Even if the bag above is explained as being a bag with side fold, the bag may optionally be provided with a folded bottom. The advantage of the invention will be achieved irrespectively of the design of the bag bottom.

According to a further embodiment, the method according to the invention is peculiar in that that the superposed first and second flat side are made of multi-layered films, that at least the outermost layers of the first and second flat sides facing each other are made of a weldable plastic material, and that at least the outermost layers of the side pieces facing the flat sides are made of a weldable plastic material.

According to a further embodiment, the method according to the invention is peculiar in that at least the outermost layers of the first and the second flat sides facing away from each other are made of a non-weldable plastic material.

According to a further embodiment, the method according to the invention is peculiar in that the weldable material is PE or PP, and that the non-weldable plastic material is PET, OPA or OPP.

The thinning has a width corresponding to the width of the zipper parts. It is possible to make the thinning with different widths if it is only ensured that the width of the thinning at least corresponds to the width of the zipper parts.

Methods of removing material can be applied as alternative to forming the thinning by extrusion. This may be effected by burning material away by a heating jaw or by abrading.

Generally, a bag according to the invention will be made by formation of webs.

Bags will thus be formed of bag webs of the type with side pieces and bottom pieces that are connected by the flat sides. Side pieces and bottom pieces will therefore usually be folded sides and/or bottoms. Between the two film webs folded film pieces are thus placed, forming the folded side pieces of the bag, and possibly bottom pieces as well. The web is cut up for forming the individual bags. When the bags are provided with zipper, the zipper parts will be disposed between two superposed bag webs such that they can interact for closing the formed bag. The zipper parts will be made in long lengths that are applied the bag webs before placing the side pieces.

An example of the making in principle of a bag web can e.g. be found in US 6,796,932. However, the described method is to be adapted in that the side pieces extend across the entire width of the bag web and in that the film webs used for forming the side pieces are to be provided with thinnings opposite the position of the zipper.

### Description of the Drawing

The invention will now be explained in more detail with reference to the accompanying schematic drawing, wherein
- Figs. 1 and 2: show a plan view and a top view, respectively of a prior art bag;
- Figs. 3 and 4: show views corresponding to Figs. 1 and 2 of a bag according to the invention;
- Figs. 5A and 5B: show sectional views on the line V-V in Fig. 3 with the bag in open and closed condition, respectively;
- Fig. 6: shows a schematic view of a film web for use in making the side pieces;
- Fig. 7: shows an item cut from the film web shown in Fig. 6 for use in formation of the side pieces;
- Fig. 8: shows a presentation in principle where the items shown in Fig. 7 are disposed between the two film webs for forming flat sides and side faces of the bag item; and
- Fig. 9: shows a schematic view corresponding to Fig. 6 of an alternative film web for use in making the side pieces.

### Detailed Description of Embodiments of the Invention

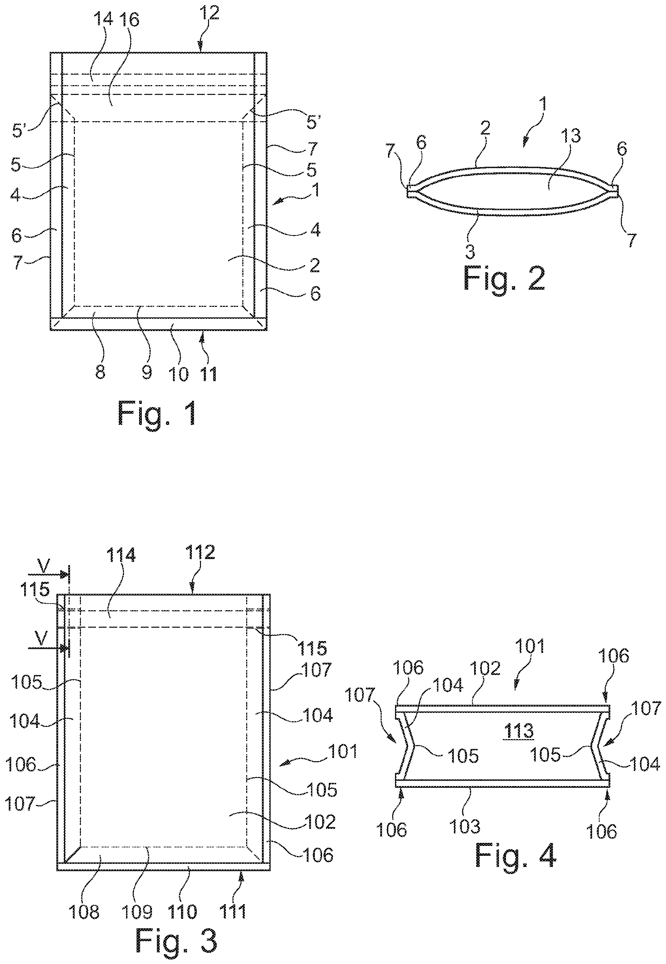

In the description, identical or corresponding elements will be provided with the same designations, however such that the embodiment associated with the invention will have designations of the prior art embodiment but added 100. A prior art bag 1 shown in Fig. 1 and 2 will therefore be designated as the bag 101 in Fig. 3 and 4 that show a bag according to the invention.

In Figs. 1 and 2 is seen a bag 1 according to prior art. The bag 1 is formed of a first flat side 2 and a second flat side 3. Folded side pieces 4 are disposed between the two flat sides. Broken lines 5 in Fig. 1 illustrate a folding that at the same time indicates the extension of the folded side pieces 4. The side pieces 4 are welded to the flat sides 2, 3 in edge areas 6 adjacent to the side edges 7 of the flat sides. At the bottom, the bag is provided with a folded bottom piece 8, and the extension of the latter is shown by the broken line 9 indicating the folding of the folded bottom piece 8. The bottom piece 8 is welded also to the flat sides at an edge area 10 adjacent to the lower side edge 11 of the bag.

At the upper side edge 12 of the bag is provided an opening 13 (see Fig. 2).

The bag 1 is provided with a zipper 14 running in parallel with the upper side edge 12 of the bag surrounding the opening 13. The zipper 14 runs between two opposing side edges 7 of the bag.

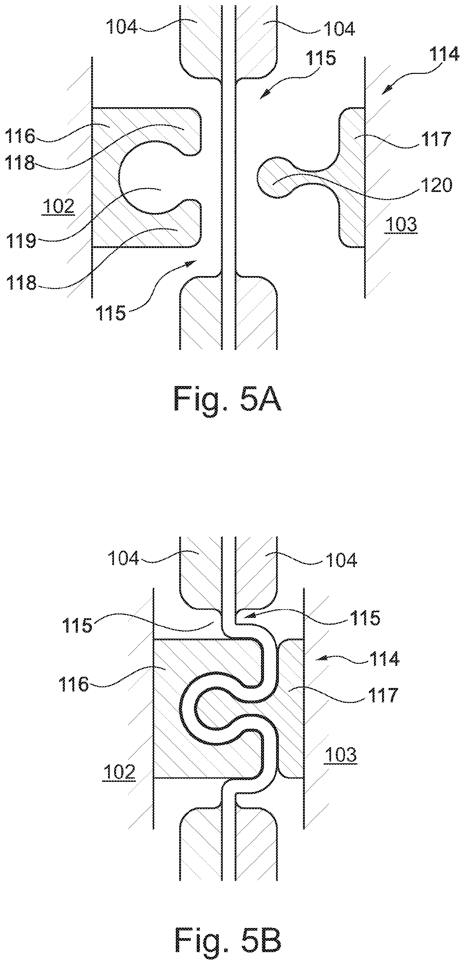

The zipper is formed of strip-shaped zipper parts 116 and 117, which will be explained in more detail with reference to Figs. 5A and 5B.

In Fig. 1 is seen that the side folds 4 have an upper oblique edge 5' located at a position under the zipper 14. A film strip 16 covers the upper end of the side pieces 4, gluing the latter to one of the flat sides 2, 3 of the bag in order to ensure a tight closure of the bag.

In Fig. 2, the bag 1 shown in Fig. 1 is seen from above when opened. Therefore it appears that the opening 13 is lenticular, extending between the two direct weldings of the flat sides 2, 3 in the edge areas 6.

Irrespectively that the bag 1 at a position under the zipper 14 is provided with folded side pieces 4, which enables increased volume and a larger cross-section of the bag, the bag will have the shape appearing on Fig. 2 in the opening 13.

A bag 101 according to the invention is shown in Figs. 3 and 4. This bag differs primarily in that the folded side pieces 104 extend over the entire height of the bag, up to the top edge 112 surrounding the opening 113 of the bag. Moreover, the side pieces 104 are modified by formation of a thinning 115, as explained below. Broken lines 105 in Fig. 3 illustrate a folding which at the same time indicates the extension of the folded side pieces 104.

Particularly clearly appearing on Fig. 4, the folded side pieces 104 are welded at the edge areas 106. When opening the bag, the folded side pieces 104 will be unfolded as illustrated in Fig. 4. The opening 113 of the bag hereby appears with a largely rectangular cross-section. The opening 113 will therefore be substantially larger than the opening 13 shown in Fig. 2.

A thinning 115 is formed in the side pieces 104 at the location of the zipper 114. This thinning 115 appears more clearly on Figs. 5-8.

Figs. 5A and 5B show the situation of the zipper 114 in open and closed condition, respectively.

The zipper 114 consists of the zipper parts 116 and 117. The zipper element 116 is a female part. A cross-section of a strip-shaped element is shown. The female part has to resilient legs 118 surrounding a concavity 119. The male part 117 is also strip-shaped, having a strip-shaped projection 120 intended for reception in the concavity 119.

As illustrated in Figs. 5A and 5B, the folded side pieces 104 in the area at the zipper are superposed each other such that there are two folded parts of a side piece opposite the zipper 114. The thinning 115 is located opposite the two zipper parts 116 and 117.

When the zipper parts 116 and 117 are brought to engage as illustrated n Fig. 5B, the two thin material layers from the side pieces 104 will be clamped within the concavity 119 and secured by the engagement of the projection 120. Due to the resiliency of the legs 118, the additional material thickness located opposite the side pieces can be accommodated in the zipper.

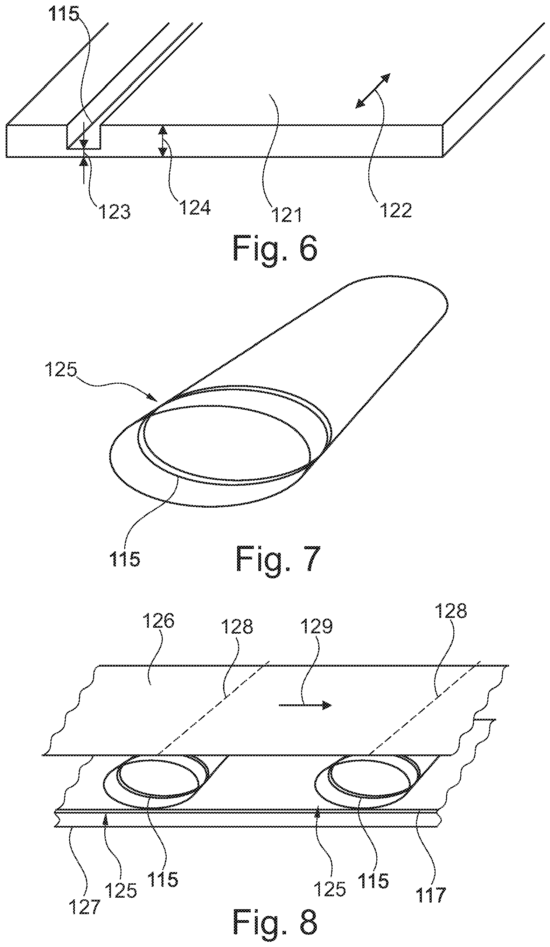

Fig. 6 illustrates a film web 121 in which a thinning 115 is formed. The arrow 122 indicates the direction of producing the web. The web is made by extrusion in a flat nozzle such that the thinning 115 appears in the film web 121 during the making thereof. It appears here that the material thickness 123 at the thinning is significantly smaller than the material thickness 124 of the film web 121. The thinning 115 appears as a recess with a material thickness 124 at each side of the thinning 115. The web can alternatively be made as a multi-layered film where the film layers form a reduced material thickness 123 at the thinning.

The material thickness opposite the thinning will typically be between 5 and 25 µm, preferably between 10 and 20 µm. The material thickness of the plastic film will typically be between 50 and 200 µm, preferably between 80 and 120 µm.

Fig. 7 shows an item 125 cut from the material web 121 and then folded for forming a tubular shape with the thinning 115 disposed externally of the tubular shape.

Fig. 8 illustrates how the tubular items 125 are disposed between a first film web 126 and a second film web 127 that are used for forming the first and the second bag sides 102 and 103, respectively.

The items 125 will thus be squeezed flat when the film webs 126 and 127 are joined. Then, cutting at cutting lines marked by the broken lines 128 is performed. An item will thus constitute a side piece formed in a bag which is made by a method described in principle in US patent 6,796,932.

In Fig. 8 appears one zipper element 117 fastened to the film web 127 at a position before the items 125 are applied. The zipper element 116 will be placed at the bottom side of the film web 126.

When the items 125 are placed between the two film webs, the two outwardly facing thinnings 115 will therefore be disposed opposite the position of the zipper parts 116, 117.

Alternatively, it is possible to have thinnings 115 at the opposite side of the film webs.

The making of the bags takes place by moving the film webs in the direction indicated by the arrow 129.

It is noted that Fig. 8 only illustrates part of the production process as reference incidentally is made to the description of the principle of a production process given in US 6,796,932.

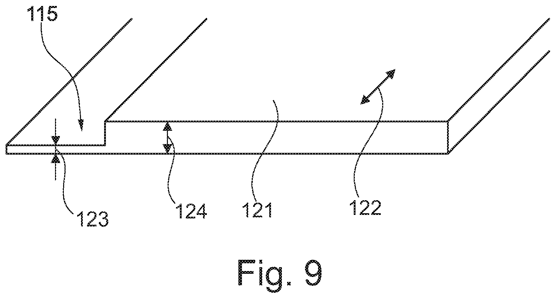

Fig. 9 illustrates an alternative film web 121 in which a thinning 115 is formed. The arrow 122 indicates the direction of producing the web. The web is made by extrusion in a flat nozzle such that the thinning 115 appears in the film web 121 during the making thereof. It appears here that the material thickness 123 at the thinning is significantly smaller than the material thickness 124 of the film web 121. The thinning 115 appears as an edge area with a material thickness 124 only at one side of the thinning 115. The web can alternatively be made as a multi-layered film where the film layers form a reduced material thickness 123 at the thinning.

## Claims

1. A bag (101) with a zipper closure, wherein the bag is formed of:
- a first (102) and a second (103) superposed flat side formed of a first plastic film and
- folded side pieces (104) formed of a second plastic film and which are disposed between the flat sides (102,103) of the bag and welded to edge areas (106) at the side edges of the flat sides (102,103), the bag including interacting zipper parts (116,117) in the form of a male part (117) and a female part (116) connected with each their flat side (102,103) and extending from side edge (107) to side edge (107) of the bag (101),
**characterised in that** the folded side pieces (104) extend from the bottom edge of the bag to the top edge of the bag, and that in the side pieces (104) a thinning (115) of material is established in an area opposite to the zipper parts disposed on the flat sides (102,103), such that the side pieces (104) in the thinned area have a material thickness enabling the male and female parts (117,116) to engage each other while at the same time the material of the side pieces is clamped there between, and wherein the second plastic film (121) comprising the thinning (115) is made of a multi-layered film where the film layers form a reduced material thickness (123) at the thinning (115).

2. A bag according to claim 1, **characterised in that** that the zipper parts are strip-shaped, and that the male part has a projection, and that the female part is made of two resilient legs forming a concavity adapted to receive the projection of the male part and the folded side pieces when the projection of the male part is pressed in between the legs of the female part.

3. A bag according to claim 1 or 2, **characterised in that** the side pieces in the area opposite the thinned parts have a thickness between 5 and 25 µm, preferably between 10 and 20 µm.

4. A bag according to claim 1, 2 or 3, **characterised in that** that the flat sides and the side pieces are formed of a plastic film with a thickness between 50 and 200 µm, preferably between 80 and 120 µm.

5. A bag according to any preceding claim, **characterised in that** that the superposed first and second flat side are made of multi-layered films, that at least the outermost layers of the first and second flat sides facing each other are made of a weldable plastic material, and that at least the outermost layers of the side pieces facing the flat sides are made of a weldable plastic material.

6. A bag according to claim 5, **characterised in that** at least the outermost layers of the first and the second flat sides facing away from each other are made of a non-weldable plastic material.

7. A bag according to claim 5 or 6, **characterised in that** the weldable material is PE or PP, and that the non-weldable plastic material is PET, OPA or OPP.

8. A bag according to any preceding claim, **characterised in that** the zipper parts are welded or glued to the flat sides.

9. A bag according to any preceding claim, **characterised in that** the thinning is formed by forming the side pieces of the bag of an extruded web with the thinning produced by extrusion.

10. A bag according to any preceding claim, **characterised in that** the bag is also provided with a folded bottom.

11. A method for making a bag (101) with a zipper closure, the bag being formed of a first and a second flat side (102,103) that are mutually superposed, and side pieces (104) that are inserted and folded between the flat sides (102,103) of the bag and welded to edge areas (106) at the side edges of the flat sides, the bag including interacting zipper parts (116,117) in the form of a male part (117) and a female part (116) connected with each their flat side and extending from side edge (107) to side edge (107) of the bag (101), **characterised in that** the method comprises steps of providing the first and the second flat side (102,103), superposing the flat sides and providing zipper parts (116,117) and placing these on the flat sides (102,103), and disposing folded side pieces (104) between the flat sides extending from the bottom edge of the bag to the top edge of the bag, that in the side pieces, prior to placing the zipper parts (116,117), a thinning (115) of material is established in an area opposite to the zipper parts provided on the flat sides such that the side pieces in the thinned area are imparted a material thickness that enables the male and female parts to engage each other while at the same time the material of the side pieces (104) is clamped there between, and wherein the second plastic film (121) comprising the thinning (115) is made of a multi-layered film where the film layers form a reduced material thickness (123) at the thinning (115).

12. A method according to claim 11, **characterised in that** that the superposed flat sides are made of multi-layered films, that at least the outermost layers of the first and second flat sides facing each other are made of a weldable plastic material, and that at least the outermost layers of the side pieces facing the flat sides are made of a weldable plastic material.

13. A method according to claim 11 or 12, **characterised in that** at least the outermost layers of the first and the second flat sides facing away from each other are made of a non-weldable plastic material.

14. A method according to claim 12 or 13, **characterised in that** the weldable material is PE or PP, and that the non-weldable plastic material is PET, OPA or OPP.

15. A method according to any of claims 11-14, **characterised in that** the bags are made in continuous webs where the zipper parts are applied in long strip-like webs, and that the webs are cut so as to form individual bag items wherein the zipper parts extend between the side edges of the bags.

## Patentansprüche

1. Beutel (101) mit Reißverschlussverschluss, wobei der Beutel aus Folgendem gebildet ist:
- einer ersten (102) und einer zweiten (103) flachen Seite, die übereinanderliegen, die aus einer ersten Kunststofffolie gebildet sind und
- gefaltete Seitenteile (104), die aus einer zweiten Kunststofffolie gebildet sind und die zwischen den flachen Seiten (102, 103) des Beutels angeordnet und an Kantenbereiche (106) an den Seitenkanten der flachen Seiten (102, 103) geschweißt sind, wobei der Beutel zusammenwirkende Reißverschlussteile (116, 117) in der Form eines Positivteils (117) und eines Negativteils (116), die jeweils mit ihrer flachen Seite (102, 103) verbunden sind und sich von Seitenkante (107) zu Seitenkante (107) des Beutels (101) erstrecken, beinhaltet, **dadurch gekennzeichnet, dass** sich die gefalteten Seitenteile (104) von der unteren Kante des Beutels zu der oberen Kante des Beutels erstrecken und dass in den Seitenteilen (104) eine Verdünnung (115) des Materials in einem Bereich gegenüber den Reißverschlussteilen, die an den flachen Seiten (102, 103) angeordnet sind, festgelegt ist, sodass die Seitenteile (104) in dem verdünnten Bereich eine Materialdicke aufweisen, die es ermöglicht, dass das Positivteil und das Negativteil (117, 116) miteinander in Eingriff gelangen, während gleichzeitig das Material der Seitenteile dazwischen eingeklemmt ist, und wobei die zweite Kunststofffolie (121), die die Verdünnung (115) umfasst, aus einer mehrschichtigen Folie gefertigt ist, wobei die Folienschichten eine reduzierte Materialdicke (123) an der Verdünnung (115) bilden.

2. Beutel nach Anspruch 1, **dadurch gekennzeichnet, dass** die Reißverschlussteile streifenförmig sind und dass das Positivteil einen Vorsprung aufweist und dass das Negativteil aus zwei elastischen Schenkeln gefertigt ist, die eine Konkavität bilden, die ausgelegt ist, um den Vorsprung des Positivteils und die gefalteten Seitenteile aufzunehmen, wenn der Vorsprung des Positivteils zwischen die Schenkel des Negativteils gedrückt ist.

3. Beutel nach Anspruch 1 oder 2, **dadurch gekennzeichnet, dass** die Seitenteile in dem Bereich gegenüber den verdünnten Teilen eine Dicke zwischen 5 und 25 µm, vorzugsweise zwischen 10 und 20 µm, aufweisen.

4. Beutel nach Anspruch 1, 2 oder 3, **dadurch gekennzeichnet, dass** die flachen Seiten und die Seitenteile aus einer Kunststofffolie mit einer Dicke zwischen 50 und 200 µm, vorzugsweise zwischen 80 und 120 µm, gebildet sind.

5. Beutel nach einem der vorstehenden Ansprüche, **dadurch gekennzeichnet, dass** die erste und zweite flache Seite, die übereinanderliegen, aus mehrschichtigen Folien gefertigt sind, dass zumindest die äußersten Schichten der ersten und zweiten flachen Seite, die einander zugewandt sind, aus einem schweißbaren Kunststoffmaterial gefertigt sind, und dass zumindest die äußersten Schichten der Seitenteile, die den flachen Seiten zugewandt sind, aus einem schweißbaren Kunststoffmaterial gefertigt sind.

6. Beutel nach Anspruch 5, **dadurch gekennzeichnet, dass** zumindest die äußersten Schichten der ersten und zweiten flachen Seite, die voneinander abgewandt sind, aus einem nichtschweißbaren Kunststoffmaterial gefertigt sind.

7. Beutel nach Anspruch 5 oder 6, **dadurch gekennzeichnet, dass** das schweißbare Material PE oder PP ist und dass das nichtschweißbare Kunststoffmaterial PET, OPA oder OPP ist.

8. Beutel nach einem der vorstehenden Ansprüche, **dadurch gekennzeichnet, dass** die Reißverschlussteile an die flachen Seiten geschweißt oder geklebt sind.

9. Beutel nach einem der vorstehenden Ansprüche, **dadurch gekennzeichnet, dass** die Verdünnung durch Bilden der Seitenteile des Beutels aus einer extrudierten Bahn gebildet ist, wobei die Verdünnung mittels Extrusion erzeugt wird.

10. Beutel nach einem der vorstehenden Ansprüche, **dadurch gekennzeichnet, dass** der Beutel auch mit einem gefalteten Boden versehen ist.

11. Verfahren zum Fertigen eines Beutels (101) mit einem Reißverschlussverschluss, wobei der Beutel aus einer ersten und einer zweiten flachen Seite (102, 103), die wechselseitig übereinanderliegen, und Seitenteilen (104), die zwischen den flachen Seiten (102, 103) des Beutels eingesetzt und gefaltet sind und an Kantenbereiche (106) an den Seitenkanten der flachen Seiten geschweißt sind, gebildet ist, wobei der Beutel zusammenwirkende Reißverschlussteile (116, 117) in der Form eines Positivteils (117) und eines Negativteils (116), die jeweils mit ihrer flachen Seite verbunden sind und sich von Seitenkante (107) zu Seitenkante (107) des Beutels (101) erstrecken, beinhaltet, **dadurch gekennzeichnet, dass** das Verfahren Schritte des Bereitstellens der ersten und zweiten flachen Seite (102, 103), Übereinanderlegen der flachen Seiten und Bereitstellen der Reißverschlussteile (116, 117) und Platzieren derselben an den flachen Seiten (102, 103) und Anordnen gefalteter Seitenteile (104) zwischen den flachen Seiten, die sich von der unteren Kante des Beutels zu der oberen Kante des Beutels erstrecken, umfasst, dass in den Seitenteilen vor dem Platzieren der Reißverschlussteile (116, 117) eine Verdünnung (115) des Materials in einem Bereich gegenüber den Reißverschlussteilen, die an den flachen Seiten angeordnet sind, festgelegt wird, sodass die Seitenteile in dem verdünnten Bereich eine Materialdicke aufweisen, die es ermöglicht, dass das Positivteil und das Negativteil miteinander in Eingriff gelangen, während gleichzeitig das Material der Seitenteile (104) dazwischen eingeklemmt wird, und wobei die zweite Kunststofffolie (121), die die Verdünnung (115) umfasst, aus einer mehrschichtigen Folie gefertigt ist, wobei die Folienschichten eine reduzierte Materialdicke (123) an der Verdünnung (115) bilden.

12. Verfahren nach Anspruch 11, **dadurch gekennzeichnet, dass** die übereinanderliegenden flachen Seiten aus mehrschichtigen Folien gefertigt sind, dass zumindest die äußersten Schichten der ersten und zweiten flachen Seite, die einander zugewandt sind, aus einem schweißbaren Kunststoffmaterial gefertigt sind, und dass zumindest die äußersten Schichten der Seitenteile, die den flachen Seiten zugewandt sind, aus einem schweißbaren Kunststoffmaterial gefertigt sind.

13. Verfahren nach Anspruch 11 oder 12, **dadurch gekennzeichnet, dass** zumindest die äußersten Schichten der ersten und zweiten flachen Seite, die voneinander abgewandt sind, aus einem nichtschweißbaren Kunststoffmaterial gefertigt sind.

14. Verfahren nach Anspruch 12 oder 13, **dadurch gekennzeichnet, dass** das schweißbare Material PE oder PP ist und dass das nichtschweißbare Kunststoffmaterial PET, OPA oder OPP ist.

15. Verfahren nach einem der Ansprüche 11-14, **dadurch gekennzeichnet, dass** die Beutel aus durchgehenden Bahnen gefertigt sind, wobei die Reißverschlussteile in langen, streifenartigen Bahnen aufgebracht sind, und dass die Bahnen so geschnitten sind, dass sie einzelne Beutelstücke bilden, wobei sich die Reißverschlussteile zwischen den Seitenkanten der Beutel erstrecken.

## Revendications

1. Sac (101) doté d'une fermeture à glissière, dans lequel le sac est formé des parties suivantes :
- un premier (102) et un second (103) côté plat superposé formé d'un premier film plastique et
- des pièces latérales repliées (104) formées d'un second film plastique et qui sont disposées entre les côtés plats (102, 103) du sac et soudées aux zones de bord (106) au niveau des bords latéraux des côtés plats (102, 103), le sac comprenant des parties de fermeture à glissière (116, 117) en interaction se présentant sous la forme d'une partie mâle (117) et d'une partie femelle (116) reliées avec chacun de leur côté plat (102, 103) et s'étendant du bord latéral (107) jusqu'au bord latéral (107) du sac (101), **caractérisé en ce que** les pièces latérales repliées (104) s'étendent du bord inférieur du sac jusqu'au bord supérieur du sac et **en ce que**, dans les pièces latérales (104), un amincissement (115) de matière est établi dans une zone opposée aux parties de fermeture à glissière disposées sur les côtés plats (102, 103), de sorte que les pièces latérales (104) dans la zone amincie ont une épaisseur de matière permettant aux parties mâle et femelle (117, 116) de venir en prise l'une avec l'autre tout en fixant par serrage la matière des pièces latérales entre elles, et dans lequel le second film plastique (121) comprenant l'amincissement (115) est constitué d'un film multicouche dans lequel les couches de film forment une épaisseur de matière réduite (123) au niveau de l'amincissement (115) .

2. Sac selon la revendication 1, **caractérisé en ce que** les parties de fermeture à glissière sont en forme de bande, et **en ce que** la partie mâle présente une saillie et **en ce que** la partie femelle est constituée de deux pattes élastiques formant une concavité conçue pour recevoir la saillie de la partie mâle et les pièces latérales repliées lorsque la saillie de la partie mâle est comprimée entre les pattes de la partie femelle.

3. Sac selon la revendication 1 ou 2, **caractérisé en ce que** les pièces latérales situées dans la zone opposée aux parties amincies ont une épaisseur comprise entre 5 et 25 µm, de préférence entre 10 et 20 µm.

4. Sac selon la revendication 1, 2 ou 3, **caractérisé en ce que** les côtés plats et les pièces latérales sont formés d'un film plastique ayant une épaisseur comprise entre 50 et 200 µm, de préférence entre 80 et 120 µm.

5. Sac selon une quelconque revendication précédente, **caractérisé en ce que** les premier et second côtés plats superposés sont constitués de films multicouches, **en ce qu'**au moins les couches les plus à l'extérieur des premier et second côtés plats se faisant face sont constituées d'une matière plastique soudable et **en ce qu'**au moins les couches les plus à l'extérieur des pièces latérales faisant face aux côtés plats sont constituées d'une matière plastique soudable.

6. Sac selon la revendication 5, **caractérisé en ce qu'**au moins les couches les plus à l'extérieur des premier et second côtés plats opposés l'un à l'autre sont constituées d'une matière plastique non soudable.

7. Sac selon la revendication 5 ou 6, **caractérisé en ce que** la matière soudable est le PE ou le PP et **en ce que** la matière plastique non soudable est le PET, l'OPA ou l'OPP.

8. Sac selon une quelconque revendication précédente, **caractérisé en ce que** les parties de fermeture à glissière sont soudées ou collées aux côtés plats.

9. Sac selon une quelconque revendication précédente, **caractérisé en ce que** l'amincissement est formé en formant les pièces latérales du sac d'une bande extrudée avec l'amincissement produit par extrusion.

10. Sac selon une quelconque revendication précédente, **caractérisé en ce que** le sac est également pourvu d'un fond plié.

11. Procédé de fabrication d'un sac (101) doté d'une fermeture à glissière, le sac étant formé d'un premier et d'un second côté plat (102, 103) qui se superposent, et de pièces latérales (104) qui sont insérées et repliées entre les côtés plats (102, 103) du sac et soudées à des zones de bord (106) au niveau des bords latéraux des côtés plats, le sac comprenant des parties de fermeture à glissière (116, 117) en interaction sous la forme d'une partie mâle (117) et d'une partie femelle (116) reliées avec chacun de leur côté plat et s'étendant d'un bord latéral (107) jusqu'au bord latéral (107) du sac (101), **caractérisé en ce que** le procédé comprend les étapes de fourniture du premier et du second côté plat (102, 103), de superposition des côtés plats et de fourniture des pièces de fermeture à glissière (116, 117) et de mise en place de celles-ci sur les côtés plats (102, 103), et de disposition des pièces latérales repliées (104) entre les côtés plats s'étendant du bord inférieur du sac jusqu'au bord supérieur du sac, **en ce que** dans les pièces latérales, avant la mise en place des parties de fermeture à glissière (116, 117), un amincissement (115) de matière est établi dans une zone opposée aux parties de fermeture à glissière prévue sur les côtés plats de sorte qu'une épaisseur de matière est conférée aux pièces latérales de la zone amincie qui permet aux parties mâle et femelle de venir en prise l'une avec l'autre tout en fixant par serrage la matière des pièces latérales (104) entre elles et dans lequel le second film plastique (121) comprenant l'amincissement (115) est constitué d'un film multicouche dans lequel les couches de film forment une épaisseur de matière réduite (123) au niveau de l'amincissement (115) .

12. Procédé selon la revendication 11, **caractérisé en ce que** les côtés plats superposés sont constitués de films multicouches, **en ce qu'**au moins les couches les plus à l'extérieur des premier et second côtés plats se faisant face sont constituées de matière plastique soudable, et **en ce qu'**au moins les couches les plus à l'extérieur des pièces latérales faisant face aux côtés plats sont constituées de matière plastique soudable.

13. Procédé selon la revendication 11 ou 12, **caractérisé en ce qu'**au moins les couches les plus à l'extérieur des premier et second côtés plats opposés l'un à l'autre sont constituées de matière plastique non soudable.

14. Procédé selon la revendication 12 ou 13, **caractérisé en ce que** la matière soudable est le PE ou le PP et **en ce que** la matière plastique non soudable est le PET, l'OPA ou l'OPP.

15. Procédé selon l'une quelconque des revendications 11 à 14, **caractérisé en ce que** les sacs sont fabriqués à partir de bandes continues dans lesquelles les parties de fermeture à glissière sont appliquées en longues bandes en forme de ruban, et **en ce que** les bandes sont coupées de manière à former des articles de sacs individuels dans lesquels les parties de fermeture à glissière s'étendent entre les bords latéraux des sacs.
